# EUROPEAN PATENT SPECIFICATION

(11) **EP 3 213 241 B1**
(45) Date of publication and mention of the grant of the patent: **21.08.2019**
(21) Application number: 14904765.6
(22) Date of filing: 30.10.2014
(51) Int. Cl.: G06F 21/34, G02F 1/167, G09G 3/34, H04L 9/00, H04L 9/30, H04L 9/32

(54) **ACCESS MEDIUM**
ZUGANGSMEDIUM
SUPPORT D'ACCÈS

(43) Date of publication of application: 06.09.2017
(73) Proprietor: Hewlett-Packard Development Company, L.P., Spring TX 77389 (US)
(72) Inventor: SIMSKE, Steven J., Fort Collins, Colorado 80528-9544 (US); GILA, Omer, Palo Alto, California 94304-1100 (US); LEONI, Napoleon J., Palo Alto, California 94304-1100 (US); BIRECKI, Henryk, Palo Alto, California 94304-1100 (US)
(74) Representative: Haseltine Lake Kempner LLP
(86) International application number: PCT/US2014/063071
(87) International publication number: WO 2016/068925

(56) References cited:
- KR-A- 20030 084 037
- KR-A- 20100 048 710
- US-A1- 2005 144 446
- US-A1- 2010 232 715
- US-A1- 2012 206 341
- US-A1- 2012 320 001
- US-A1- 2013 086 389
- US-B1- 7 380 708

## Description

### Background

Electronic paper ("e-paper") is a display technology designed to recreate the appearance of ink on ordinary paper. Some examples of e-paper reflect light like ordinary paper and may be capable of displaying text and images. Some e-paper is implemented as a flexible, thin sheet, like paper. One familiar e-paper implementation includes e-readers.

US2012/0206341 A1 discloses an access medium, a system and a medium in accordance with the preamble of each independent claim. Other related art is disclosed in US2012/0320001 A1 and in US7,380,708 B1.

### Brief Description of the Drawings

Figure 1 is a block diagram schematically illustrating a security arrangement, according to one example of the present disclosure.
Figure 2 is a block diagram schematically illustrating a plurality of modes in which a first access element is linked to a second access element, according to one example of the present disclosure.
Figure 3 is a block diagram schematically illustrating an access medium including at least a passive e-paper display portion and a memory resource to store a second access element, according to one example of the present disclosure.
Figure 4 is a block diagram schematically illustrating an access medium including at least a passive e-paper display portion on which is written a secure first access element and a memory resource to store a second access element, according to one example of the present disclosure.
Figure 5 is a block diagram schematically illustrating an on-board memory resource in association with an access medium, according to one example of the present disclosure.
Figure 6 is a block diagram schematically illustrating a one-time code in association with an access medium, according to one example of the present disclosure.
Figure 7A is a block diagram schematically illustrating a terminal for writing and reading relative to an access medium, according to one example of the present disclosure.
Figure 7B is a block diagram schematically illustrating a second reader, according to one example of the present disclosure.
Figure 8 is a block diagram schematically illustrating a user interface, according to one example of the present disclosure.
Figure 9 is a plan view schematically illustrating an access medium operatively coupled relative to a terminal, according to one example of the present disclosure.
Figure 10 is a block diagram schematically illustrating an authorization module, according to one example of the present disclosure.
Figure 11 is a block diagram schematically illustrating memory resources associated with a terminal, according to one example of the present disclosure.
Figure 12 is a block diagram of an ion writing assembly, according to one example of the present disclosure.
Figure 13 is a partial top plan view schematically illustrating an electrode array of individually addressable nozzles, according to one example of the present disclosure.
Figure 14 is sectional view of an e-paper assembly, according to one example of the present disclosure.
Figure 15 is block diagram schematically illustrating an access medium including at least a passive e-paper display portion, a memory resource, and a forensic security indicia, according to one example of the present disclosure.
Figure 16 is a block diagram schematically illustrating an access medium similar to the access medium of Figure 4, with a printed form of the second access element incorporating a forensic security indicia, according to one example of the present disclosure.
Figure 17 is a block diagram schematically illustrating a third reader for association with a terminal, according to one example of the present disclosure.
Figure 18 is a block diagram schematically illustrating different types of forensic security indicia, according to one example of the present disclosure.
Figure 19 is a block diagram schematically illustrating a control portion for a terminal, according to one example of the present disclosure.
Figure 20A is a flow chart diagram schematically illustrating a method of using an access medium in a security protocol, according to one example of the present disclosure.
Figure 20B is a block diagram schematically illustrating an access medium in relation to a workflow, according to one example of the present disclosure.
Figures 21-22 are each a block diagram schematically illustrating an access medium including a passive e-paper display portion to display a first access element and to store a second access element.

### Detailed Description

In the following detailed description, reference is made to the accompanying drawings which form a part hereof, and in which is shown by way of illustration specific examples in which the disclosure may be practiced. It is to be understood that other examples may be utilized and structural or logical changes may be made without departing from the scope of the present disclosure. The following detailed description, therefore, is not to be taken in a limiting sense. The invention is defined by appended claims. The dependent claims define advantageous embodiments.

At least some examples of the present disclosure are directed to a security arrangement for use in association with an access medium. The security arrangement includes a first access element and a second access element. In some examples, the first access element is a secure representation.

In some examples, the first access element is substantively independent from the second access element. Accordingly, in such examples, any security measures based on the first and second access element includes an independent evaluation of each of the respective first and second access elements.

In some examples, the first access element is substantively linked or related to the second access element such that security measures (e.g. authentication) based on the first and second access elements are at least partially implemented via a comparison of the first access element relative to the second access element. In some examples, such comparison is performed according to various scrambling-based security protocols.

In some examples, the secure representation includes some form of scrambling (e.g. obscuring, embedding, serialization, encrypting or otherwise preventing at least some information from being recognized via unaided human interpretation) according to at least one scrambling-based security protocol. In some examples, a scrambling-based security protocol provides a formulaic means of mapping from an original string to an obscured string. In some examples, encryption provides for a formulaic encoding of the original string, which has maximum entropy. In at least some examples, the term "secure" is used in a relative sense in which the extent to which the representation is considered "secure" is dependent on the number of bits being encrypted, the number of unique serializations, etc. It will be understood that an appropriate level of "securing" the representation is implemented in accordance with the intended environment in which the transaction medium will be used.

In some examples, the secure representation of the first access element is in an at least partially machine-readable form, such as a bar code, QR code, or other complex pattern.

In some examples, an access medium comprises a passive e-paper, display portion and an on-board memory resource. In some instances, the first access element is selectively formed as an image on the passive e-paper display portion.

In some examples, the first access element is written to the passive e-paper display portion via an external imager via noncontact application of ions to the surface of the passive e-paper display portion, as later further described herein.

In some examples, the memory resource is an electronic memory resource such that the second access element is electronically stored in the memory resource. In some examples, the memory resource is a non-electronic memory resource, such as a printed form that stores the second access element.

In some examples, the access medium includes a forensic security indicia formed or printed on the access medium. In general terms, the forensic security indicia provides an additional level of physical security to ensure authenticity of the access medium presented at the terminal. Accordingly, even in the event that the first and second access elements were compromised or the authorization scheme(s) associated with the terminal were compromised, the forensic security indicia would provide an additional mechanism by which to evaluate the authenticity of an access medium. In some examples, the forensic security indicia is substantively linked to the first access element and/or the second access element. However, in some examples, the forensic security indicia is substantively independent of the first access element and the second access element.

In some examples, the access medium is used to ensure secure access to perform a transaction, such as a financial transaction, a physical access transaction, an electronic access transaction, an information transaction, a supply chain transaction, etc. In some examples, such transactions or tasks are performed via a mechanism, tool, device, medium other than the access medium by which access to the workflow was granted (according to the authorization and/or authentication protocols in some examples of the present disclosure).

In some examples, the access medium becomes part of a workflow in which participation in at least one aspect of the workflow incorporates use of the access medium to ensure authenticity of a participant and/or an article in the workflow. In some examples, such workflows include at least one transaction.

In some examples, in order to provide such secure access, the access medium is deployed for use with a terminal including a first authorization module to determine user authorization upon communicative coupling of the access medium relative to the terminal. In some examples, communication with the user occurs via a display of the terminal while in some examples, communication with the user occurs via a passive e-paper display portion of the access medium.

The terminal includes an imager and a first reader. The imager writes, upon user authorization, a secure, first access element in the passive e-paper display portion of the access medium. The first reader reads the first access element. In some examples, the terminal includes a second reader to read the the second access element from the on-board memory resource. However, in some examples, the second reader is separate from, and independent of, the terminal but is in communication with the terminal or a system supporting the terminal.

In examples in which the first access element is substantively independent of the second access element, authentication is determined via an evaluation of the secure first access element relative to a reference and an evaluation of the second access element relative to a reference. In some examples, the reference is a physical reference and in some examples, the reference is an "on-line" or cloud-accessible reference. In examples in which the first access element is substantively related to the second access element, a comparison of the respective first and second access elements at least partially determines authentication.

In some examples, a one-time code is associated with the access medium for each use of the access medium at the terminal (or components of system) such that submission of an authorized one-time code to the terminal acts as a prerequisite before the terminal (via an imager) will write the first access element onto the passive e-paper display portion. In some examples, the one-time code is obtained from the access medium while in some examples, the one-time code is obtained via an out-of-band communication (i.e. a communication not directly between the access medium and the terminal). In some examples, authorization to use the terminal via the one-time code is managed via an authorization module of the terminal.

In one aspect, it will be understood that determining authentication according to the first access element and the second access element is separate from, and independent of, the authorization threshold associated with the one-time code.

In some examples, the terminal includes an imager having an ion writing unit adapted for forming images (such as the first access element) via noncontact application of charges (e.g. ions) onto the passive e-paper display portion of the access medium.

Among other aspects, the general security arrangement (according to at least some examples of the present disclosure) provides an access medium that is low in cost because it is free of more complicated security arrangements, such as those involving power-based display systems on a card, biometric sensors, on-board power sources, etc.

Upon successful authentication via the security arrangement of the respective first and second access elements, secure access is enabled to the particular type of access to which the user has pre-established rights. In some examples, the access medium (according to at least some examples of the present disclosure) is used to achieve authentication but then other transaction mediums or mechanisms are used to initiate or perform an activity to which access has been granted via the authentication. In some examples, the access medium (according to at least some examples of the present disclosure) is used to achieve authentication and is then used to initiate or perform an activity to which access has been granted via the authentication.

Moreover, the security arrangement provided via at least some examples of the present disclosure address some of the limitations of ordinary card security, which have been frequently compromised, thereby subjecting consumers to fraud and uncertainty. For example, the static nature of ordinary cards offers little protection regarding their authenticity at a point-of-sale terminal, point-of-contact terminal, over-the-phone, or online transactions. These deficiencies extend to situations involving impostors or a system-wide theft of card credentials.

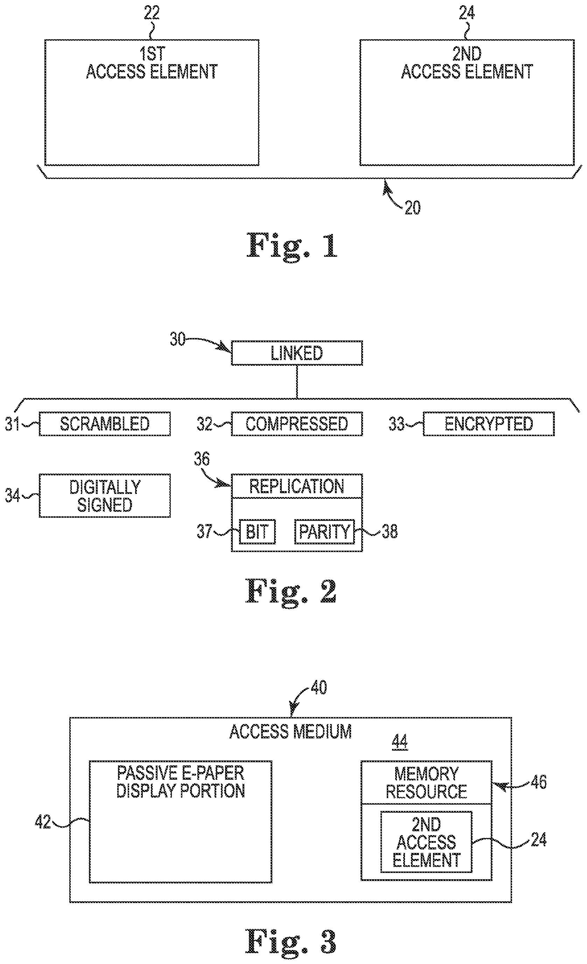

These examples, and additional examples, are described throughout the present disclosure and in association with at least Figures 1-22.

Fig 1 is a block diagram of a security arrangement, according to one example of the present disclosure. As shown in Figure 1, the security arrangement 20 includes a first access element 22 and a second access element 24. In some examples, the first access element 22 is at least partially embodied in a secure representation.

In some examples, the first access element 22 takes the form of a string of alphanumeric characters or symbols, at least one alphanumeric word, etc. In some examples, the first access element 22 takes the form of more complex two-dimensional pattern of alphanumeric characters, symbols, marks, etc. In some examples, the first access element 22 takes the form of a two-dimension graphic. In some examples, the first access element 22 takes the form of an image of a person or object, such as a photograph.

In some examples, regardless of the particular form of the first access element 22, at least a portion of the first access element 22 is formed as a secure representation by which some form of obscuring, embedding, encrypting or otherwise preventing at least some information related to the first access element 22 from being recognized via unaided human interpretation.

In some examples, the second access element 24 takes the form of a string of alphanumeric characters or symbols, at least one alphanumeric word, etc. In some examples, the second access element 24 takes the form of more complex two-dimensional pattern of alphanumeric characters, symbols, marks, etc. In some examples, the second access element 24 takes the form of a recognizable image familiar to the user.

In some examples, regardless of the particular form of the second access element 24, at least a portion of the second access element 24 is formed as a secure representation by which some form of obscuring, embedding, encrypting or otherwise preventing at least some information related to the second access element 24 from being recognized via unaided human interpretation.

In some examples, the second access element 24 is stored electronically in a memory resource of the access medium.

In some examples, the second access element 24 is in a non-secure form such that one can recognize and interpret at least the second access element 24 without interpretive aids or electronic mechanisms.

In some examples, the first access element 22 is substantively independent of the second access element 24 such that authentication is at least partially determined by evaluation of the respective first and second access elements 22, 24 independent from each other.

In some examples, the second access element 24 is substantively related to the first access element 22 such that a comparison of the respective first and second access elements 22, 24 enables a determination of whether the card (or possessor of the card) is authentic. In one aspect, authentication determines that the access medium is genuine or valid and, therefore, is not an unauthorized copy or not a fake representation.

Figure 2 is a block diagram schematically illustrating a plurality 30 of different relational arrangements by which the first access element 22 and the second access element 24 are substantively linked, according to one example of the present disclosure. In general terms, the first access element and the second access element are related in some substantive way sufficient to ensure genuineness of an article, such as an access medium, in possession of a user.

As shown in Figure 2, in some examples, the substantive link or relationship (between the first and second access elements) includes the first access element 22 being a scrambled form 31 of the second access element 24, being a compressed form 32 of the second access element 24, being an encrypted form 33 of the second access element 24, being a digitally signed form 34 of the second access element 24, and a replicated form 36 of the second access element 24. In some examples, the replicated form 36 is a bit-checked replication 37 while in some examples, the replicated form 36 is a parity-checked replication 38. In some examples, the digitally signed form 34 includes a public key infrastructure (PKI) component or is implemented according to a lightweight directory access protocol (LDAP).

In some examples, the security arrangement 20 of Figures 1-2 is at least partially implemented via an access medium 40, which is schematically illustrated in Figure 3. The access medium 40 is generally a substrate or body, which may be flexible, semi-rigid, or rigid. In some examples, the access medium takes the form of a generally rectangular card, such as the ubiquitous format (i.e. size, shape) of credit cards, debit cards, personnel badges, access badges, gift cards. However, the access medium 40 is not limited to such card formats and can take other shapes, such as but not limited to, circular shapes, triangular shapes, etc.

In some examples, the access medium 40 comprises at least one passive e-paper, display portion 42, a non e-paper portion 44, and a memory resource 46, as shown in Figure 3. In some instances, the passive e-paper display portion 42 is blank, i.e. does not bear any formed image. However, images can be written to the passive e-paper display portion 42, which will retain the images until a later time when the image is erased and/or another image is written to the passive e-paper display portion 42. In some examples, the written image is the first access element 22.

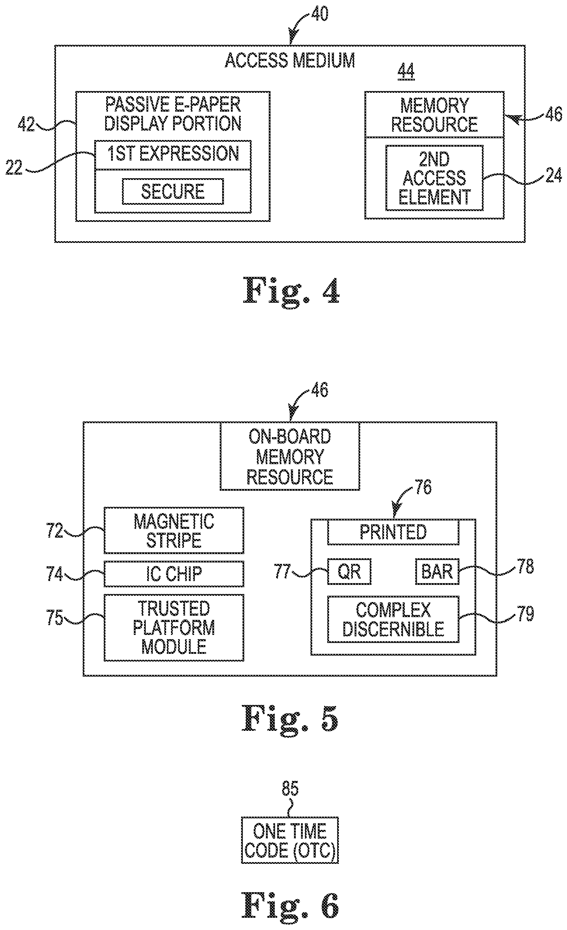

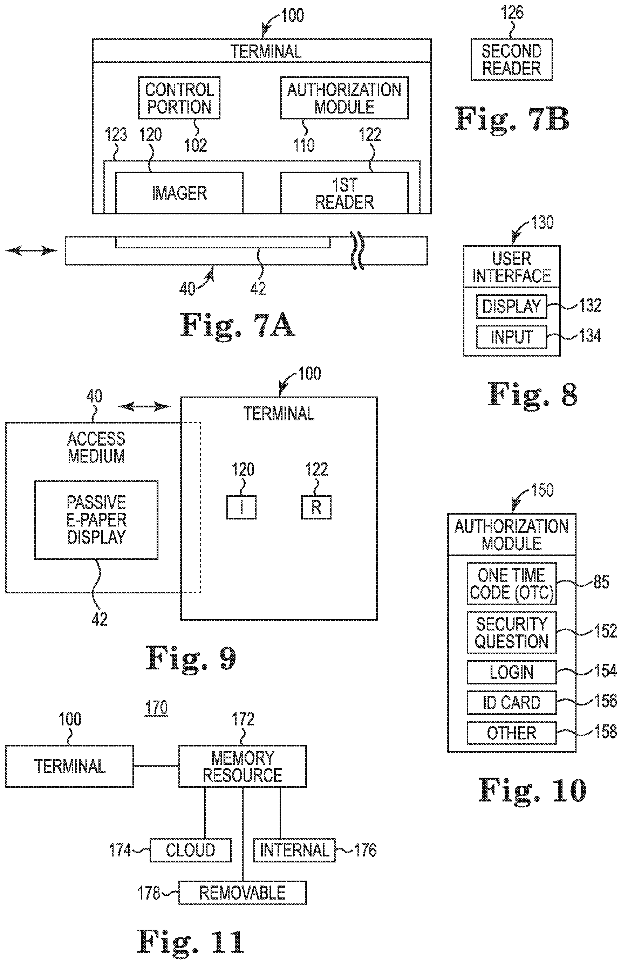

In some examples, as shown in Figure 4, the passive e-paper display portion 42 displays the first access element 22 in a secure representation 26. In some examples, the second access element 24 is accessible via an on-board memory resource 46 of the access medium 40. In some examples, the on-board memory resource 46 is an electronic memory resource configured for wired or wireless communication with a second reader 126 (Fig. 7B) to provide the second access element 24 for evaluation by control portion 102.

Figure 5 schematically illustrates the on-board memory resource 46, according to one example of the present disclosure. In some examples, the on-board memory resource 46 is embodied in a swipeable magnetic stripe 72, such as those typically found on credit cards, debit cards, gift cards, etc. In some examples, the on-board memory resource 46 is embodied in an integrated circuit (IC) chip 74. In some examples, the IC chip 74 comprises a smart chip, such as but not limited to, the type employed on chip-and-pin (e.g. EMV) cards. In some examples, the on-board memory resource 46 comprises a trusted platform module 75. In some examples, the on-board memory resource 46 is embodied in a non-electronic, printed form 76. In some examples, the printed form 76 includes a two-dimensional (2D) code, frequently referred to as a quick response (QR) code 77. In some examples, the printed form 76 comprises a one-dimensional (1D) bar code 198. In some examples, the printed form 76 comprises a complex, discernible pattern 79 in which information (e.g. second access element) is embedded within a complex, printed pattern with the information being discernible (e.g. decodable, interpretable) by a second reader 126 (Fig. 7B) but otherwise not readily discernible by a human.

In one aspect, in examples in which the second access element is accessible via the on-board memory resource 46, it provides the opportunity for terminal 100 to electronically read the second access element 24 for comparison with the first access element 22, which can be electronically or optically read via first reader 122. In this way, comparison and evaluation of the respective first and second access elements 22, 24 relative to each can be performed automatically via terminal 100. If the second access element 24 is visible on the access medium 40, then an operator at the terminal can, in some instances, provide further evaluation such as determining whether the visible second access element 24 matches the electronically readable second access element 24, which can be made available in human readable form to the operator via user interface 130.

In some examples, the on-board memory resource 46 is embodied in a combination of the various memory modalities 72, 74, 76, 77, 78, and 79.

In some examples, the on-board memory resource 46 is a non-electronic memory resource suitable to enable second access element 24 to be read (e.g. optically) from a surface of the access medium 40.

In some examples, the non-electronic memory resource is printed or formed on a non e-paper portion 44 of the access medium 40.

In some examples, the non-electronic memory resource 46 is formed as an image on a second, passive e-paper display portion (of the access medium) that is separate and independent of passive e-paper display portion 42.

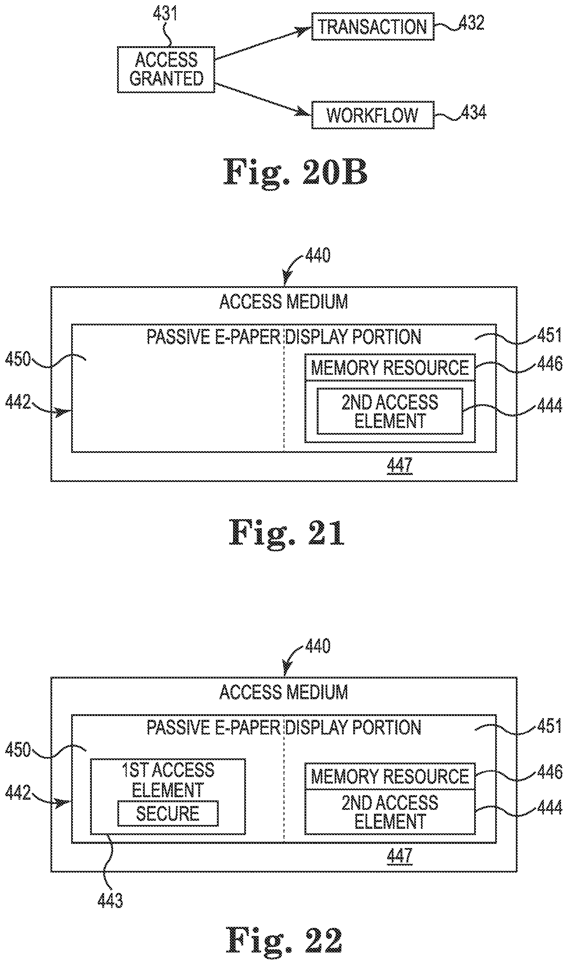

In some examples, a single passive e-paper display portion 42 includes a first portion on which the first access element 22 is written each time the access medium 40 is authorized for use at a terminal and a second portion to display the second access element 24. In this example, the same second access element 24 is rewritten onto the second portion of the passive e-paper display portion 42 each time a first access element 22 is written onto the first portion. Alternatively, the same second access element 24 is maintained on the second portion of the passive e-paper display portion 42 each time a new first access element 22 is written onto the first portion. Such examples, and additional examples, are further described later in association with Figures 21-22.

In some examples, the first access element 22 is not written to the passive e-paper display portion 42 until and unless the terminal or system is initialized via a one-time code 85 or authorization process, as schematically represented in Figure 6.

In some examples, a one-time code 85 is printed on a surface of the access medium 40, and is temporarily physically concealed (e.g. a scratch-off format).

In some examples, the one-time code 85 is entered directly via user interface 130 of terminal 100. In some examples, a user deploys the one-time code 85 at a web site or other internet/cloud resource, which then communicates authorization to the terminal 100.

In some examples, the one-time code 85 is not obtained from the access medium 40, but is obtained via the cloud or other resources independent of the terminal 100, and then is entered directly at the terminal or submitted to the terminal 100 indirectly via a cloud resource.

In one aspect, the one-time code is exhausted after use. Accordingly, upon receiving authorization at the terminal 100, the terminal 100 causes the imager 120 to write the first access element 22 to the passive e-paper display 42, and after the first access element 22 is "used", the imager 120 of terminal 100 then writes the next one-time code 85 to the passive e-paper display portion 42 to be available for the next instance of authorization.

In some examples, after the use of the first one-time code (e.g. of the type printed in a temporarily concealed manner on the access medium) subsequent one-time codes are obtained via out of band communications, at website, etc.

In some examples, such as when memory resource 46 is not an electronic memory resource, access medium 40 is arranged without an on-board power source and/or without circuitry. In other words, in these examples the access medium includes no "direct" power mechanism or circuitry to write or erase an image (such as first access element 22) on the passive e-paper display portion 42, except for a common electrode to enable contactless direction of ions onto the passive e-paper display portion 42 to cause image formation thereon. This latter aspect is described in further detail in association with at least Figure 10.

In some examples, such as those in which the memory resource 46 of the access medium 40 comprises an on-board electronic memory resource, the passive e-paper display portion 42 is electrically separate from, and independent of, the electronic memory resource 46. In some examples, the passive e-paper display portion 42 is also electrically separate from, and independent of, from any circuitry (e.g. wireless telemetry) of the access medium 40 that is couplable to an external power source that would provide power to the electronic memory resource 46. In other words, in some examples, the passive e-paper display portion 42 is electrically isolated from such other circuitry present on or within the access medium 40.

In some examples, the access medium 40 has an on-board power source, but the passive e-paper display portion 42 is electrically separate from, and independent of, the on-board power source. In some examples, the on-board power source is a battery, solar cell, or other energy harvesting mechanism.

In some examples, the non-e-paper portion of the access medium 40 of is free of permanently visible markings. Accordingly, without prior knowledge of how or where to use the access medium 40, an unauthorized possessor of the access medium 40 would be less likely to be successful in attempts to exploit the access medium 40 in an unauthorized manner.

Fig 7A is block diagram schematically illustrating a terminal 100 for use with an access medium 40, according to one example of the present disclosure. In general terms, the terminal 100 is a facility or station at which an access medium 40 is presented to establish access and/or perform a transaction, such as a financial transaction, an information transaction, a supply chain transaction, etc. In some examples, an information transaction includes a physical access transaction, a personnel identification transaction, an electronic access transaction, etc. Moreover, prior to any transaction being performed, the user is authorized to use the terminal with the access medium 40 and then access medium 40 is authenticated via the terminal 100 to ensure its validity or genuineness.

While authorization and authentication establish a threshold (via their access medium 40) before a user can deploy their access rights, in some examples the access rights are further dependent on other parameters set by the general security arrangement to which the terminal 100 acts a gateway. In some examples, the access rights depend on which applications and/or services a particular user has permission to use or depend on a geographic location or type of business. In some examples, the access rights depend on a current content state of the card and/or imager 120 or depend on user preferences. In some examples, such post-authorization, post-authentication access rights depend on user assets, such as if the access medium 40 also acts as a financial transaction card (e.g. credit card, debit card, loyalty card, etc.) in addition to the function of the access medium 40 as a tool for authorization and/or authentication.

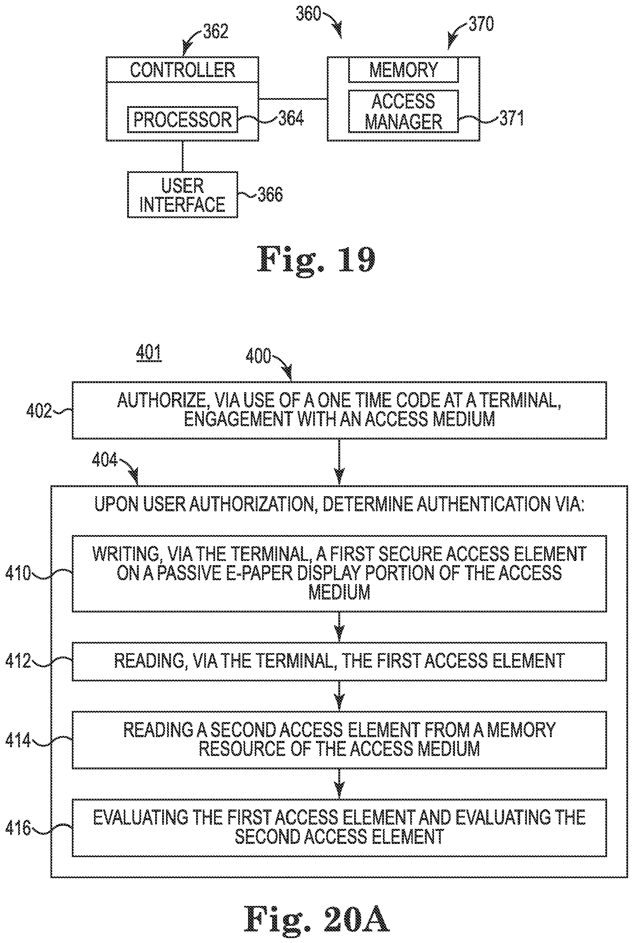

With this in mind, as shown Figure 7A, in some examples terminal 100 includes a control portion 102, an authorization module 110, imager 120, and a first reader 122. In some examples, control portion 102 provides control of the general operation of terminal 100 and includes an access manager to manage authorizations and authentications via the terminal 100. At least one example of control portion 102 is further described later in association with at least Figure 19.

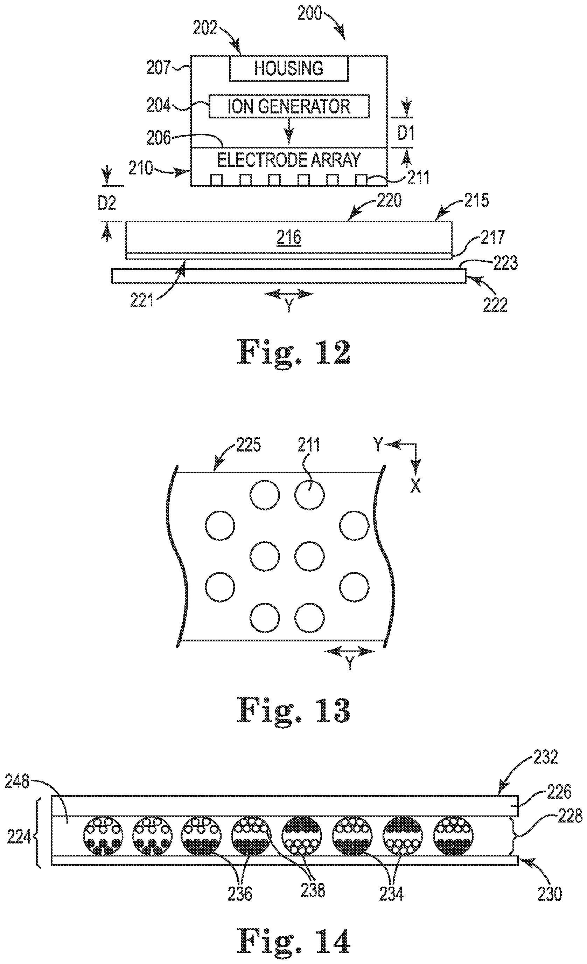

As represented by directional arrow Y, the terminal 100 is arranged to enable relative movement between an access medium 40 and the terminal 100. Further details regarding such relative movement are later addressed in association with at least Figure 12.

In general terms, upon a user authorization via authorization module 110, the imager 120 writes the first access element 22 (in a secure representation) in the passive e-paper display portion 42 of the access medium 40. In other words, the writing of the first access element 22 via the imager 120 does not occur until after, and unless, a successful user authorization has been completed. The reader 122 reads the secure first access element 22 from the passive e-paper display portion 42.

In some examples, a second reader 126 (shown in Figure 7B) is associated with the terminal 100 to read the second access element 24 from the memory resource. In some examples, the second reader 126 forms part of the terminal 100. In some examples, the second reader 126 is separate from, and independent of, the terminal 100 but in communication with the terminal 100. In one such example, a printer (e.g. digital press, multifunction printer, etc.) houses the second reader 126 and is in wired or wireless communication with the terminal 100. In some examples, upon a successful authentication via access medium 40, access is granted to at least some functions of the printer.

In some examples, the second reader 126 is provided to electronically read electronic memory resource 46 of the access medium 40, as further described herein. In some examples, the second reader 126 communicates with a communication portion of the electronic memory resource 46 via a short range wireless communication protocol, such as Near Field Communication (NFC), RFID, etc. In some examples, the second reader 126 establishes electrical and physical contact with a portion of the access medium 40 to facilitate electrical communication to/from the electronic memory resource 46.

In some examples, the second reader 126 is provided to optically read a non-electronic memory resource 46.

In some examples in which the first and second access elements 22, 24 are not substantively linked, authentication is determined by control portion 102 via an evaluation of each of the first and second access elements 22, 24 independent from one another. In some examples in which the first and second access elements 22, 24 are substantively linked, authentication is determined by control portion 102 via comparison of the secure first access element 22 to the second access element 24 stored in the memory resource 46.

In some examples, terminal 100 is associated with and/or incorporates a user interface 130, as shown in Figure 8. In general terms, the user interface 130 enables the authorization module 100 to receive and send authorization-related information relative to the user, as well as enabling other forms of user participation at terminal 100. In some examples, user interface 130 includes a display 132 and an input 134. The display 132 displays information to at least a user and/or operator of the terminal 100, while input 134 enables entry of information pertinent to the authentication and/or subsequent transaction. Input 134 can take many forms including a keypad, mouse, touchpad, etc. In some instances, display 132 and input 134 are combined into a graphical user interface with touchpad capabilities. Additional features and attributes of some examples of user interface 130 are described in association with user interface 366 of Figure 19.

In some examples, operative coupling of the access medium 40 relative to terminal 100 enables the passive e-paper display portion 42 to act as a display for terminal 100, as shown in Figure 9. In some instances, the passive e-paper display portion 42 is the sole display for user interaction with the terminal 100 while in other instances, the passive e-paper display portion 42 is in addition to at least one display of the terminal 100, such as display 132 of user interface 130. In instances in which the passive e-paper display portion acts a sole display for terminal 100, this arrangement provides additional security for the terminal 100 because one would not be capable of successfully interacting with the terminal 100 without an appropriate access medium 40, which is capable of displaying authorization-related information and authentication-related information in association with the particular type of terminal 100 for which the access medium 40 is adapted.

In some examples, the access medium 40 is automatically positionable relative to the terminal 100 to permit user observation of the passive e-paper display portion 42. In some examples, the access medium 40 is moved to an observation position as shown in Figure 9 after each instance of writing to or reading from the access medium 40 via the imager 120, first reader 122, and second reader 126, respectively.

In general terms and with further reference to Figure 7A, upon operative coupling of the access medium 40 relative to terminal 100, the terminal 100 initiates an authorization activity via authorization module 110 which acts a first security challenge. In particular, authorization module 110 causes a display (e.g. display 132 and/or display portion 42 of access medium) to pose at least one security challenge to the user at the terminal 100.

In some examples, authorization module 110 includes the features and attributes of authorization module 150 shown in Figure 10. As shown in Figure 10, authorization module 150 includes a one-time code (OTC) function 151, security question function 152, a log-in function 154, an ID card function 156, and other function 158.

In some examples, one-time code function 151 operates according to at least the same features and attributes associated with one-time code 85, as previously described in association with at least Figure 6.

In some examples, authorization is implemented via the security question function 152, which presents a security question to the user via the display (132 in Fig. 8 or 42 in Fig. 9) associated with terminal 100. Some non-limiting examples of topics of typical security questions include "mother's maiden name", "first pet's name", "first school", "favorite movie", etc. Some non-limiting examples of security questions include the use of mnemonics to which a user knows an associated response.

In reply, the user uses input 134 of user interface 130 to provide an answer to the security question. In some examples, such answers are stored in a database accessible by the terminal 100 and are based on a prior interaction in which the user provided such information in anticipation of making later attempts to gain access via the terminal 100. As noted later, in some examples this authorization-related information (e.g. answers) can be stored elsewhere.

Upon a correct match between the question and answer, the authorization module 150 indicates success via the display (42, 132) and/or moves to further authorization activity, further authentication activity, etc.

In some examples, authorization is implemented via a log-in function 154 of authorization module 150 in which the terminal 100 (via the display 42 and/or 132) prompts a user for a user name and a password. Upon successful entry of the correct username/password, the terminal 100 confirms proper authorization.

In some examples, authorization is implemented via an ID card function 156 in which a user presents an ID card to an operator of the terminal or presents the ID card to the terminal 100, which reads (via first reader 122 or other reader) the ID card to determine authorization. In some examples, ID card is read by a device other than terminal 100 and then sends authorization-related information based on the ID card to the ID card function 156 of the authorization module 150. In some examples, other out-of-band schemes are used to supply at least some user authorization credentials to terminal 100 in order to facilitate authorization at terminal 100.

In some examples, at least two of the various authorization functions are implemented in order for the terminal 100 to declare a successful authorization of a particular user and access medium. For instance, in some examples, successful engagement by the user via both the log-in function 154 and the ID card function 156 is demanded prior to the authorization module 150 confirming proper user authorization.

Accordingly, in some examples, the initial security challenge performed via authorization module 110, 150 employs information separate from, and independent of, the first access element 22 and second access element 24. In other words, in at least some examples of the present disclosure, user authorization is distinct from authentication of the access medium 40.

In some examples, the access medium 40 acts as part of the authorization protocol, in which the physical presence of the access medium 40 provides at least part of the log-in information associated with log-in function 154.

In some examples, via other function 158, other forms of authorization processes or activities are employed alone and/or in combination with the above-described authorization functions.

Figure 11 is a block diagram schematically illustrating terminal 100 in association with a memory resource 172, according to one example of the present disclosure. In general terms, the memory resource 172 shown in Figure 10 represents a location or manner in which the terminal 100 obtains information pertinent to determining authorization and/or authentication in association with the access medium 40 presented at the terminal. In some examples, the memory resource 172 is a cloud-based memory resource 174 with which the terminal 100 communicates via wired or wireless communication protocols. In some examples, terminal 100 includes a local agent for facilitating communication and operation via the cloud-based resource 174.

In some examples, the terminal 100 includes or is in a communication with an internal or local memory resource 176, such that communication to and from the cloud is not employed. In some examples, the local memory resource 176 includes a local network including terminal 100.

In some examples, the terminal 100 includes a removable memory resource 178, which is removably couplable relative to (or inserted into) terminal 100 for supporting authorization and/or authentication functions. In one aspect, the removably memory resource 178 enables robust secure authorization and/or authentication in remote locations "off the grid" and/or in catastrophic situations in which normal communication protocols (wireless, internet, cloud, etc.) and/or normal electrical power sources are unavailable. In some examples, the removable memory resource 178 comprises a trusted platform module (TPM).

In some examples, terminal 100 employs a combination of the various memory resources 174, 176, 178.

In some examples, even if the second access element 24 is permanently visible on the access medium 40 in a non-electronic form of memory resource 46, the second access element 24 is also accessible via one of the memory resources 174, 176, 178 associated with terminal 100, which are made accessible to the terminal following user authorization. Alternatively, in some examples, the second access element 24 is also accessible via an electronic form of on-board memory resource 190 of the access medium 40, as previously described. In these instances, electronic access to the second access element 24 facilitates faster and/or automated comparison of the second access element 24 relative to the secure, first access element 22.
In some examples, the access medium 40 is not used to perform transactions subsequent to authorization and authentication, but instead the access medium 40 is used solely to establish access (via authorization and authentication) for participation in a workflow or to perform a task, transaction, etc., which may or may not occur at or via the terminal 100. Accordingly, in some examples, after the access medium 40 accomplishes this purpose, a second access medium or other tool, device, mechanism, modality, etc. is exploited to perform an action or transaction of interest.

In some examples, the on-board memory resource 190 also stores information pertinent to operation of access medium 40 in relation to terminal 100 and/or to performing transactions pursuant to access medium 40. In some examples, the on-board memory resource 190 stores authorization-related and/or authentication-related, such as queries, answers, logins, relational information regarding the first and second access elements.

Once an authorization has been completed via terminal 100, the terminal 100 commences a second security challenge which begins via the terminal 100 causing the first access element 22 to be written in a secure representation to the passive e-paper display portion 42 of access medium 40. In some examples, the written, secure first access element 22 is read (e.g. optically) by the first reader 122 and then compared to the second access element 24. In examples in which the second access element 24 is permanently visible as a non-electronic form of memory resource 46 of access medium 40, the second access element 24 can be optically read by first reader 122 and processed and compared to the secure first access element 22.

Alternatively, when the second access element 24 is stored in an electronic form of memory resource 46, the second access element 24 is read via second reader 126 (Fig. 7B).

Based on the comparison and evaluation, if the secure first access element 22 is substantively related to the second access element 24 in the expected way, then the terminal 100 concludes that proper authentication is present. Alternatively, when the first and second access elements 22, 24 are not substantively linked, authentication is determined according to independent evaluations of the respective first and second access elements 22, 24.

In some examples, upon completing a successful authentication, the imager 120 of the terminal 100 is employed to update at least one portion of the first access element 22 in the secure representation (in passive e-paper display portion 42). In some examples, the updating includes the imager 120 writing a security string/nonce corresponding to successful user authorization, wherein the added security string/nonce forms part of the first access element 22.

Once authentication is confirmed, the user is free to engage in their desired transaction, whether it be a financial transaction, a security transaction, a physical access transaction, an electronic access transaction, information transaction, a supply chain transaction, etc.

In some examples, such transactions are performed via the terminal 100 using the access medium 40 by employing additional/other information accessible via the access medium 40.

In some examples, such transactions are performed independent of the terminal 100 after the terminal 100 communicates a successful authentication message to a pertinent facility, person, etc.

In some examples, the passive e-paper display portion 42 of the access medium 40 includes a renewable, variable personal identification number (PIN). After completion of a transaction (following the above-described authorization and authentication via terminal 100), the imager 120 of the terminal 100 rewrites the PIN on the passive e-paper display portion 42. In some examples, the PIN is present on the passive e-paper display portion 42 simultaneous with the first access element 22.

In some examples, the PIN is used to gain initial authorization, such as via the authorization module 110 (Fig. 7A).

In some examples, after a successful authorization and successful authentication, the subsequent transaction (for which security was provided) is automatically initiated by terminal 100 via display 132 in user interface 130 and/or via passive e-paper display 42 of access medium 40 (when operatively coupled to terminal 100). Alternatively, in some examples, after a successful authorization and successful authentication, terminal 100 (via display 132 or passive e-paper display 42) provides an automatic query to the user to identify which type of transaction is to be initiated.

In some examples, the access manager of control portion 102 (Fig. 7A, 19) includes a variable function employed for a given access medium 40 to cause some instances of a first access element 22 and a second access element 24 to be substantively linked and to cause other instances of a first access element 22 and a second access element 24 to be substantively independent. In this arrangement, in addition to at least the first access element 22 being updated, replaced, supplemented upon each instance of use of the access medium 40 at the terminal, the control portion 102 (via the terminal) varies the type of relation (i.e. linked or independent) between the respective first and second access elements 22, 24, thereby providing an additional level of security against those attempting to gain unauthorized, unauthenticated access. In some examples, the type of relation is simply alternated upon each iterative engagement with the terminal 100. In some examples, the type of relation is assigned randomly.

In some examples, in addition to the above arrangement, additional security and assurance is provided via the system communicating the first access element 22 and/or second access element 22 to the user and/or operator of the terminal 100 via a separate communication channel such as email, text (e.g. SMS), instant messaging, Twitter, etc. In some instances, these communications are considered out-of-band communications.

In some examples, in the event that authorization and/or authentication is not permitted for a particular access medium 40, terminal 100 acts to write on the passive e-paper display portion 42 a corresponding indication. For example, the terminal 100 can write the term "INVALID", "UNAUTHORIZED ATTEMPT", or similar language on the passive e-paper display portion 42 or store similar indications in on-board memory resource 190. In some examples, terminal 100 (and its associated systems) would bar future use of the access medium 40.

Figure 12 is a block diagram schematically illustrating an imaging system 200 for causing image formation on passive e-paper 215, according to one example of the present disclosure. In some examples, the passive e-paper 215 forms at least a portion of the previously described access medium 40 and generally corresponds to passive e-paper display portion 42. As shown in Figure 12, the imaging system 200 includes the ion writing unit 202 and a support 222. In some examples, the imaging system 200 is deployed as the imager 120 in the terminal 100 in Figure 7A.

In some examples, ion writing unit 202 includes a housing 207 containing and at least partially enclosing an ion generator 204, as shown in Figure 12. An electrode array 210 is located at one exterior portion 206 of the housing 207. The electrode array 210 includes an array of individually addressable, ion passage nozzles 211, which are selectively activatable (via varying an electrode potential) to be open or closed. Open nozzles 211 allow the passage of ions therethrough, while closed nozzles 211 block the passage of ions. Accordingly, the addressable electrode array 210 provides for temporal and spatial control of charges onto e-paper 215. The ion generator 204 is positioned within housing 207 to be spaced apart from electrode array 210 by a distance D1. In some examples, ion generator 204 is a corona generating device.

The term "charges" as used herein refers to ions (positive or negative), which are also sometimes referred to as free electrons. For a given ion generator, one type of charge (e.g. positive) is used to write to the e-paper while the opposite charge (e.g. negative) is used to erase images on the e-paper, which typically occurs just before writing. It will be understood that the opposite convention can be adopted in which negative charges are used to write to the e-paper and positive charges are used to erase the e-paper.

Via support 222, ion writing unit 202 and passive e-paper 215 are capable of movement relative to each other during such image formation, as represented via directional arrow Y. In particular, in some examples, support 222 acts to releasably support e-paper 215 (at least during relative motion between ion writing unit 202 and e-paper 215) to enable e-paper 215 to be positioned for receiving charges directed from writing unit 202. In one aspect, support 222 is arranged as part of a positioning mechanism that controls relative movement between ion writing unit 202 and support 222, as represented via directional arrow Y. In another aspect, a top surface 220 of support 222 is spaced from bottom surface of the electrode array 210 by a distance D2.

As shown in Figure 12, in at least some examples, the e-paper media 215 includes a charge-responsive layer 216 that includes components that switch colors when a field or charges are applied to it. In some examples, the e-paper 215 includes the charge-responsive layer 216 and a conductive layer 217 that serves as a counter-electrode on one side of the e-paper. In some examples, the color-switching components within the charge-responsive layer 216 include pigment/dye elements, which are contained in microcapsules present in a resin/polymer material, as further illustrated later in one example in association with Figure 14. In some examples, an additional functional coating is included on top of the charge-responsive layer 216.

With this in mind, ion generator 204 directs air-borne charges (e.g. charged ions) in a directed pattern via the individually addressable nozzles 211 of electrode array 210 onto an imaging surface 220 of the passive e-paper 215, which responds by switching an optical state of colored particles in e-paper 215 based on the location of the received charges on the imaging surface.

Imaging surface 220 of e-paper 215 is opposite conductive counter electrode 217. A ground return path connected to counter electrode 217 provides a path for counter charges to flow to counter electrode 217, which keeps e-paper 215 substantially charge neutral in spite of charges deposited on imaging surface 215. In some examples, counter electrode 217 is at ground. In some examples, counter electrode 217 is at any suitable reference potential to provide the fields suitable to extract charges from ion generator 204.

E-paper 215 is bi-stable, such that a collection of light absorbing and light reflecting states across e-paper 215 remains until sufficient charges or electrical fields are applied to e-paper 215. In some examples e-paper 215 is a passive e-paper that does not include electronics for changing the state of the e-paper. In other words, the e-paper media 215 is passive in the sense that it is re-writable and holds an image without being connected to an active power source during the writing process and/or after the writing is completed. In another aspect, the e-paper media 215 lacks internal circuitry and does not have an internal power supply. Moreover, other than power provided to a counter electrode to act as a biasing element, no power is directed into or onto the e-paper 215.

In some examples, as shown in Figure 13, the electrode array 210 comprises a two-dimensional array 225 of individually addressable nozzles 211 to provide high speed directing of charges. As at least partially represented by the pattern shown in Figure 13, the various nozzles 211 are strategically patterned (e.g. location and spacing) to prevent unwanted charge deposition patterns on the imaging substrate (e.g. e-paper media) that would otherwise hamper quality imaging.

In some examples, passive e-paper 215 takes the form shown in Figure 14, according to one example of the present disclosure. As shown in Figure 14, charge-responsive layer 228 includes capsules 234 containing a dispersion of charged color particles (e.g. pigment or dye) in dielectric oils. This dispersion of charged color particles includes black or dark, light absorbing, particles 236 and white, light reflecting, particles 238. A resin or polymer binder 248 encapsulates pigment capsules 234 of charge-responsive layer 228. In some examples, black particles 236 drift toward functional coating layer 226 and white particles 238 drift toward counter electrode layer 230 after positive charges are placed on imaging surface 232. In some examples, white particles 238 drift toward functional coating layer 226 and black particles 236 drift toward counter electrode layer 230 after positive charges are placed on imaging surface 232.

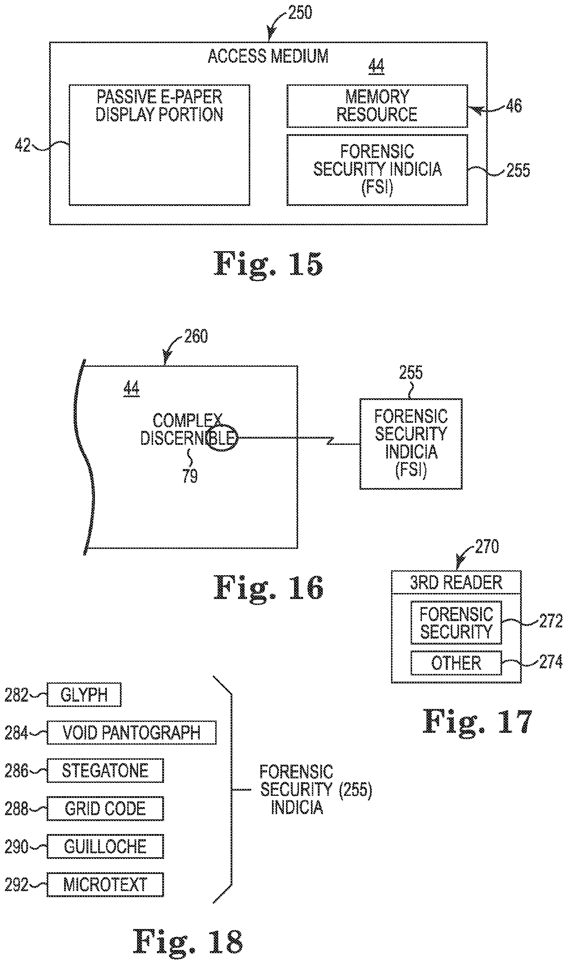

Fig 15 is a block diagram schematically illustrating an access medium including a forensic security indicia 255, according to one example of the present disclosure. In some examples, the access medium 250 includes at least some of substantially the same features and attributes as access medium 40, as previously described in association with Figures 1-14. As shown in Figure 15, access medium 250 includes passive e-paper display portion 42 and a memory resource 46, as previously described in association with at least Figures 1-14, and further includes a forensic security indicia 255. In some examples, the forensic security indicia 255 is printed or formed on a non e-paper portion 44 of the access medium 40.

In general terms, the forensic security indicia 250 provides an additional level of physical security to ensure authenticity of the access medium 250 presented at the terminal 100. Accordingly, even in the event that or authorization scheme(s) associated with the terminal 100 and/or access medium 250 were compromised in some way, the forensic security indicia 255 would provide an additional mechanism by which to evaluate the authenticity of an access medium 250.

In some examples, the forensic security indicia 255 is substantively linked to the first access element 22. In some examples, the forensic security indicia 255 is substantively independent of the first access element 22.

In some examples, the forensic security indicia 255 is substantively linked to the second access element 22. In some examples, the forensic security indicia 255 is substantively independent of the second access element 24. In some examples, the forensic security indicia 255 is substantively linked to both the first access element 22 and the second access element 24.

In some examples, the forensic security indicia 255 is physically independent of both the passive e-paper display portion 42 (which selectively bears the first access element 22) and the memory resource 46 (whether non-electronic or electronic) on the access medium 40, as shown in Figure 15.

In some examples, such as those in which the forensic security indicia 255 is substantively linked to at least one of the first access element 22 and the second access element 24, a comparison of the forensic security indicia 255 with at least one of the first access element 22 and the second access element 24 (respectively) at least partially determines authentication.

In some examples, the forensic security indicia 255 is physically separate and distinct from the second access element 24.

In some examples, instead of the above-described examples, the secure forensic security indicia 255 comprises at least one variable data printed object to which comparison is made relative to the first access element 22. In one aspect, a unique printed object is permanently printed onto each access medium 40 (according to a variable data protocol) with each unique printed object having a substantive link to each first access element 22 that will be written to the passive e-paper display portion 42 of the access medium 40. Accordingly, each first access element 22 of the series of first access elements 22 are generated in a manner such that the unique printed object (printed according to a variable data protocol) will maintain a substantive relation to each respective first access element 22 written to the access medium 40 (e.g. written onto the passive e-paper display portion 42) over the lifetime that the access medium 40 is used for access.

In some examples, the forensic security indicia 255 is embodied into at least a portion of the second access element 24, as shown in Figure 16. For instance, in examples in which the on-board memory resource 46 takes a physical form (not an electronic memory) such as a complex discernible pattern 79 (Fig. 5), the forensic security indicia 255 is embodied in or incorporated into at least a portion of the physical form (e.g. complex discernable pattern) of memory resource 46 in which the second access element 24 is stored.

In some examples involving the forensic security indicia 255, in addition to the above arrangement, additional security and assurance is provided via the system communicating the first access element 22 and/or second access element 22 to the user and/or operator of the terminal 100 via a separate communication channel such as email, text (e.g. SMS), instant messaging, Twitter, etc. In some instances, these communications are considered out-of-band communications.

In some examples, the forensic security indicia 255 includes a portion separate from the second access element 24 and a portion embodied in at least a portion of the second access element 24, as shown in Figure 16.

In some examples, as shown in Figure 17 a third reader 270 includes a forensic security indicia (FSI) function 272 to optically read or interpret the forensic security indicia 255 and "other" function 274 to read other elements, such as a human readable, permanently visible markings.

In one example, at least a component of the third reader 270 includes a forensic imaging device and related image analysis system, such as that disclosed at Simske et al., High-Resolution Glyph-Inspection Based Security System, HP Laboratories, HPL-2010-43, 2010. As disclosed therein, in some examples, the imaging device comprises a high resolution, Dyson Relay lens-based CMOS imaging device.

In some examples, forensic security indicia (FSI) 255 used in the above-described examples can take many different forms, as shown in Figure 18. As shown in Figure 18, the forensic security indicia (FSI) 255 is embodied in a glyph form 282, a void pantograph form 284, a stegatone form 286, a grid code form 288, a guilloche form 290, and a microtext form 292. In one example, the glyph form 282 is recognizable and readable via an imaging device, such as the above-described high resolution, Dyson Relay, lens-based CMOS imaging device. In some examples, the stegatone form 286 is at least consistent with encoding protocols as described in Ulichney et. al, Encoding Information in Clustered-Dot Halftones, 26th International Conference on Digital Printing Technologies, 2010.

In some examples, an access medium 250 includes a forensic security indicia (FSI) 255 permanently visible on the non e-paper portion 44 of access medium 250 and includes passive e-paper display portion 42 for selectively displaying (upon authorization) a first access element 22. However, in this example, the access medium 250 does not include a second access element 24 permanently visible on non e-paper portion 44 of access medium 250. Instead, the second access element 24 is accessed electronically from an electronic form of memory resource 46, as previously described in association with at least Figures 5, 7A-7B, and 11.

In some examples, the forensic security indicia 255 shown in Figure 15 is expressed via the substrate that forms the access medium 40 because features forming the surface of the access medium 40 (i.e. the surface distinct from the passive e-paper display portion 42) provide enough random or natural variability to be detected at the super-high resolution (e.g. 8000 lines/per inch) of the third reader 270 in its forensic security mode 272 (e.g. Dyson Relay, lens-based CMOS imaging device). Accordingly, these features on the surface of the substrate naturally function as the forensic security indicia 255 on the non e-paper portion 44 of the access medium 40. Accordingly, in this example, an artificially-constructed, separate forensic indicia 255 need not be added onto the substrate of the access medium 40.

Figure 19 is a block diagram schematically illustrating a control portion 360, according to one example of the present disclosure. In some examples, control portion 360 includes a controller 362, a memory 370, and a user interface 366.

In general terms, controller 362 of control portion 360 comprises at least one processor 364 and associated memories that are in communication with memory 370 to generate control signals to direct operation of at least some components of the systems and components described throughout the present disclosure. In some examples, these generated control signals include, but are not limited to, employing access manager 371 to manage operation of a terminal 100 in association with an access medium 40 to facilitate security measures. In some examples, a control portion 360 is present in the terminal 100 of Figure 7A as control portion 102 and/or is accessible to the terminal 100.

In particular, in response to or based upon commands received via a user interface 366 and/or machine readable instructions (including software), controller 362 generates control signals to implement security measures and/or protocols in accordance with at least some of the previously described examples and/or later described examples of the present disclosure. In some examples, controller 362 is embodied in a general purpose computer while in other examples, controller 362 is embodied in at least some of the components described throughout the present disclosure, such as terminal 100.

For purposes of this application, in reference to the controller 362, the term "processor" shall mean a presently developed or future developed processor (or processing resources) that executes sequences of machine readable instructions (such as but not limited to software) contained in a memory. In some examples, execution of the sequences of machine readable instructions, such as those provided via access manager 371 stored in memory 370 of control portion 360, cause the processor to perform actions, such as operating controller 362 to implement security measures and protocols as generally described in (or consistent with) at least some examples of the present disclosure. The machine readable instructions may be loaded in a random access memory (RAM) for execution by the processor from their stored location in a read only memory (ROM), a mass storage device, or some other persistent storage (e.g., non-transitory tangible medium or non-volatile tangible medium, as represented by memory 370. In some examples, memory 370 comprises a computer readable tangible medium providing non-volatile storage of the machine readable instructions executable by a process of controller 362. In other examples, hard wired circuitry may be used in place of or in combination with machine readable instructions (including software) to implement the functions described. For example, controller 362 may be embodied as part of at least one application-specific integrated circuit (ASIC). In at least some examples, the controller 362 is not limited to any specific combination of hardware circuitry and machine readable instructions (including software), nor limited to any particular source for the machine readable instructions executed by the controller 362.

In some examples, user interface 366 comprises a user interface or other display that provides for the simultaneous display, activation, and/or operation of at least some of the various components, functions, features, and of control portion 360, terminal 100, and related elements, as described throughout the present disclosure. In some examples, at least some portions or aspects of the user interface 366 are provided via a graphical user interface (GUI). In some examples, user interface 366 comprises at least the features and attributes of the user interface 130 in Figure 8, or vice versa.

Figure 20 is a flow chart diagram 401 illustrating a method 400 of implementing security measures via an access medium, according to one example of the present disclosure. In some examples, method 400 is performed using at least some of the functions, components, assemblies, systems as previously described in association with at least Figures 1-19 and those later described in association with Figures 21-22. In some examples, method 400 is performed using at least some functions, components, assemblies, systems other than those previously described in association with at least Figures 1-19 and those later described in association with Figures 21-22.

At 402, method 400 comprises authorizing engagement of an access medium at a terminal via submission of a one-time code. At 404, authentication is determined as further described below. The authentication is determined via writing, via the terminal, a first access element in a secure representation in a passive e-paper display portion of an access medium, as at 410. As represented at 412, determining authentication also includes reading, via the terminal, the first access element. At 414, determining authentication includes reading a second access element from an on-board memory resource of the access medium.

At 416, determining authentication according to method 400 includes evaluating the first access element and evaluating the second access element.

In some examples, as shown in Figure 20B, upon a successful authentication by which access is granted (431), the method 400 includes participation in a transaction at 430 and/or participation in a workflow 432, which may or may not utilize the access medium 40 in the transaction (432) or workflow (434), respectively.

Figure 21 is a block diagram of an access medium 440, according to one example of the present disclosure. As shown in Figure 21, access medium 440 comprises at least some of substantially the same features and attributes as the various access mediums previously described in association with Figures 1-19, except with a memory resource 446 being embodied in a second portion 451 of the passive e-paper display portion 442 distinct from a first portion 450 of the passive e-paper display portion 442 on which the first access element 443 will be written. While the second access element 444 may not be permanent in the same way as if printed or formed on a non e-paper portion 447, the second access element 444 is rewritten or preserved each time the first access element 443 or other elements are imaged to passive e-paper display portion 442, as shown in Figure 22. Accordingly, the second portion 451 of the passive e-paper display portion 442 acts as a memory resource separate and distinct from the first portion 450 of the passive e-paper display portion 442, which acts as an at least partially variable data field, in view of the first access element 442 being updated, replaced, and/or supplemented upon each use of the access medium 440.

Accordingly, prior to user authorization, the second access element 444 is visible in second portion 451 of the passive e-paper display portion 442, even though the first access element 443 has not yet been written to the passive e-paper display 442. However, after user authorization, when the first access element 443 is written to the first portion 450 of the passive e-paper display portion, the second access element 444 remains present and/or is rewritten to the second portion 451 of the passive e-paper display portion 442 to remain generally co-located with the first access element 443. In this way, both the first and second access elements 443, 444 are available for comparison and/or for independent evaluation, depending on whether they are substantively linked according to one of the example security arrangements described herein.

However, in some examples, while the second access element 444 generally remains present and visible in the second portion 451 of the passive e-paper display portion 442, this arrangement does not preclude the terminal 100 (and associated control portion 102) from changing the second access element 444 to a new, different second access element, which may or may not be substantively linked relative to the first access element 443.

In some examples, a forensic security indicia (FSI) is further provided on access medium 440 in a manner at least consistent with the examples previously described in association with Figures 15-18.

At least some examples of the present disclosure are directed to providing and/or enhancing a security arrangement by which an access medium is used at a terminal to authenticate the access medium as a gateway for performing transactions subsequent to the authentication.

Although specific examples have been illustrated and described herein, a variety of alternate and/or equivalent implementations may be substituted for the specific examples shown and described without departing from the scope of the present disclosure. This application is intended to cover any adaptations or variations of the specific examples discussed herein.

## Claims

1. An access medium (40) for use with a terminal (100), the access medium (40) comprising:
a passive e-paper display portion (42) having received an externally written first access element (22); and
a memory resource (46) storing a second access element (24), allowing authentication of the access medium (40) to be determined by evaluation of the first access element (22) and evaluation of the second access element (24) by an external access manager (371) within the terminal (100); **characterised in that**:
the first access element is written in a secure representation in an at least partially machine-readable form on the passive e-paper display portion (42); and
the access medium (40) bears a one-time code (85) which is exhausted after being used to authorize use of the access medium (40).

2. The access medium (40) of claim 1, wherein the first access element (22) is substantively linked to the second access element (24), and authentication is determined via comparison of the first access element (22) relative to the second access element (24).

3. The access medium (40) of claim 2, wherein the first access element (22) is related to the second access element (24) via at least one of replication, scrambling, parity-based replication, bit-check replication, compression, digital signature, and encryption.

4. The access medium (40) of claim 1, wherein the one-time code is temporarily physically concealed on a surface of the access medium (40).

5. The access medium (40) of claim 1, wherein the memory resource (46) is a nonelectronic memory resource accessible on at least one of a non-e-paper portion (44) of the access medium (40) and the passive e-paper, display portion (42).

6. The access medium (40) of claim 1, comprising:
at least one secure forensic security indicia (255) permanently visible on, and optically readable from, at least one surface of the access medium (40), wherein the at least one forensic security indicia (255) is substantively related to the first access element (22), and wherein comparison of the at least one secure forensic security indicia (255) and the first access element (22) at least partially determines authentication.

7. An access workflow system comprising:
a terminal (100) including:
a first module (110) to authorize use of an access card (40) upon receipt of a one-time code (85) which is exhausted after use;
an imager (120) to write, upon authorization via the first module (110), a secure representation of a first access element (22) in an at least partially machine-readable form on a passive e-paper display portion (42) of the access card (40);
a first reader (122) to optically read the secure representation of the first access element (22) from the passive e-paper display portion (42);
a second reader (126) to read a second access element (24) from a memory resource (46) of the access card (40) and
an access manager (371) to manage authorizations and authentications via the terminal (100), wherein authentication is determined via evaluation of the optically read secure representation of the first access element (22) and evaluation of the second access element (24).

8. The system of claim 7, wherein the first access element (22) is substantively linked to the second access element (24), and authentication is determined via a comparison of the first access element (22) and the second access element (24).

9. The system of claim 7, wherein the secure first access element (22) is related to the second access element (24) via at least one of replication, scrambling, parity-based replication, bit-check replication, compression, digital signature, and encryption.

10. The system of claim 7, wherein the second reader (126) forms part of the terminal (100).

11. The system of claim 7, wherein the terminal (100) includes a forensic security reader (270) to read forensic security indicia (255) on a non-e-paper portion (44) of the access card (40), wherein the forensic security indicia (255) is substantively linked to the secure first access element (22), and wherein authentication is at least partially determined via comparing the forensic security indicia (255) in relation to at least the secure first access element (22).

12. A computer readable medium storing instructions, executable on a processor of the terminal (100) of claim 7, to:
authorize an access medium (40) at the terminal (100) upon receipt of a one-time code (85) which is exhausted after use;
upon authorization, determine authenticated access via:
writing, via the terminal (100), a secure representation of a first access element (22) in an at least partially machine-readable form on a passive e-paper display portion (42) of the access medium (40);
optically reading via the terminal(100), the secure representation of the first access element (22) from the passive e-paper display portion (42);
reading a second access element (24) from a memory resource (46) of the access medium (40); and
evaluating the optically read secure representation of the first access element (22) and evaluating the second access element (24); and
initiate access via the access medium (40) upon successful authentication.

13. The computer readable medium of claim 12, wherein the first access element (22) is substantively linked to the second access element (24), and authentication is determined via a comparison of the first access element (22) and the second access element (24), and
wherein the first access element (22) is related to the second access element (24) via at least one of replication, scrambling, parity-based replication, bit- check replication, compression, digital signature, and encryption.

14. The computer readable medium of claim 10, wherein the instructions include:
upon granting access via the terminal (100) and the access medium (40), write an updated instance of the first access element (22) relative to a substantive link with the second access element (24) in a secure representation on the passive e-paper display portion (42) of the access medium (40).

15. The computer readable medium of claim 10, wherein authorizing an access medium comprises:
receiving, via the terminal (100), a first instance of the one-time code (85) on the access medium (40),
and after completing authentication, writing, via the imager (120) of the terminal (100), a second instance of the one-time code (85) on the passive e-paper display portion (42).

## Patentansprüche

1. Zugriffsmedium (40) zur Verwendung mit einem Terminal (100), das Zugriffsmedium (40) Folgendes umfassend:
einen passiven E-Papier-Anzeigeabschnitt (42), der ein extern geschriebenes erstes Zugriffselement (22) empfangen hat; und
eine Speicherressource (46) zum Speichern eines zweiten Zugriffselements (24), wobei die Authentifizierung des Zugriffsmediums (40) durch Auswertung des ersten Zugriffselements (22) und durch Auswertung des zweiten Zugriffselements (24) durch einen externen Zugriffsmanager (371) innerhalb des Terminals (100) bestimmt werden kann;
**dadurch gekennzeichnet, dass**:
das erste Zugriffselement in einer sicheren Darstellung in einer zumindest teilweise maschinenlesbaren Form auf dem passiven E-Papier-Anzeigeabschnitt (42) geschrieben ist; und
das Zugriffsmedium (40) einen einmaligen Code (85) trägt, der aufgebraucht ist, nachdem er verwendet wurde, um die Verwendung des Zugriffsmediums (40) zu autorisieren.

2. Zugriffsmedium (40) nach Anspruch 1, wobei das erste Zugriffselement (22) im Wesentlichen mit dem zweiten Zugriffselement (24) verknüpft ist, und die Authentifizierung durch Vergleich des ersten Zugriffselements (22) mit dem zweiten Zugriffselement (24) bestimmt wird.

3. Zugriffsmedium (40) nach Anspruch 2, wobei das erste Zugriffselement (22) mit dem zweiten Zugriffselement (24) über mindestens eine Replikation, Verwürfelung, paritätsbasierte Replikation, Bit-Check-Replikation, Kompression, digitale Signatur und Verschlüsselung verbunden ist.

4. Zugriffsmedium (40) nach Anspruch 1, wobei der einmalige Code vorübergehend physisch auf einer Oberfläche des Zugriffsmediums (40) versteckt ist.

5. Zugriffsmedium (40) nach Anspruch 1, wobei die Speicherressource (46) eine nichtelektronische Speicherressource ist, die auf mindestens einem von einem Nicht-E-Papierabschnitt (44) des Zugriffsmediums (40) und dem passiven E-Papier-Anzeigeabschnitt (42) zugreifbar ist.

6. Zugriffsmedium (40) nach Anspruch 1, Folgendes umfassend:
mindestens ein sicheres forensisches Sicherheitszeichen (255), das auf mindestens einer Oberfläche des Zugriffsmediums (40) dauerhaft sichtbar und optisch lesbar ist, wobei das mindestens eine forensische Sicherheitszeichen (255) im Wesentlichen mit dem ersten Zugriffselement (22) verbunden ist, und wobei der Vergleich des mindestens einen sicheren forensischen Sicherheitszeichens (255) und des ersten Zugriffselements (22) die Authentifizierung zumindest teilweise bestimmt.

7. Zugriffsarbeitsablaufsystem, Folgendes umfassend:
ein Terminal (100), Folgendes beinhaltend:
ein erstes Modul (110), um die Verwendung einer Zugriffskarte (40) nach Erhalt eines einmaligen Codes (85), der nach Verwendung aufgebraucht ist zu autorisieren;
einen Bildgeber (120), um nach Autorisierung über das erste Modul (110) eine sichere Darstellung eines ersten Zugriffselements (22) in einer zumindest teilweise maschinenlesbaren Form auf einen passiven E-Papier-Anzeigeabschnitt (42) der Zugriffskarte (40) zu schreiben;
einen ersten Leser (122), um die sichere Darstellung des ersten Zugriffselements (22) aus dem passiven E-Papier-Anzeigeabschnitt (42) optisch zu lesen;
einen zweiten Leser (126), um ein zweites Zugriffselement (24) von einer Speicherressource (46) der Zugriffskarte (40) zu lesen; und
einen Zugriffsmanager (371), um Autorisierungen und Authentifizierungen über das Terminal (100) zu verwalten, wobei die Authentifizierung durch Auswertung der optisch gelesenen sicheren Darstellung des ersten Zugriffselements (22) und durch Auswertung des zweiten Zugriffselements (24) bestimmt wird.

8. System nach Anspruch 7, wobei das erste Zugriffselement (22) im Wesentlichen mit dem zweiten Zugriffselement (24) verknüpft ist, und die Authentifizierung durch einen Vergleich des ersten Zugriffselements (22) und des zweiten Zugriffselements (24) bestimmt wird.

9. System nach Anspruch 7, wobei das sichere erste Zugriffselement (22) mit dem zweiten Zugriffselement (24) über mindestens eine Replikation, Verwürfelung, paritätsbasierte Replikation, Bit-Check-Replikation, Kompression, digitale Signatur und Verschlüsselung verbunden ist.

10. System nach Anspruch 7, wobei der zweite Leser (126) einen Teil des Terminals (100) bildet.

11. System nach Anspruch 7, wobei das Terminal (100) einen forensischen Sicherheitsleser (270) beinhaltet, um forensische Sicherheitszeichen (255) auf einem Nicht-E-Papierabschnitt (44) der Zugriffskarte (40) zu lesen, wobei die forensischen Sicherheitszeichen (255) im Wesentlichen mit dem sicheren ersten Zugriffselement (22) verknüpft sind, und wobei die Authentifizierung zumindest teilweise durch Vergleichen der forensischen Sicherheitszeichen (255) in Bezug auf mindestens das sichere erste Zugriffselement (22) bestimmt wird.

12. Computerlesbares Medium zur Speicherung von Anweisungen, ausführbar auf einem Prozessor des Terminals (100) nach Anspruch 7, zum:
Autorisieren eines Zugriffsmediums (40) am Terminal (100) nach Erhalt eines einmaligen Codes (85), der nach Verwendung aufgebraucht ist;
Bestimmen des authentifizierten Zugriffs nach Autorisierung über:
Schreiben, über das Terminal (100), einer sicheren Darstellung eines ersten Zugriffselements (22) in einer zumindest teilweise maschinenlesbaren Form auf einen passiven E-Papier-Anzeigeabschnitt (42) des Zugriffsmediums (40);
optisches Lesen der sicheren Darstellung des ersten Zugriffselements (22) über das Terminal (100) aus dem passiven E-Papier-Anzeigeabschnitt (42);
Lesen eines zweiten Zugriffselements (24) aus einer Speicherressource (46) des Zugriffsmediums (40); und
Auswerten der optisch gelesenen sicheren Darstellung des ersten Zugriffselements (22) und Auswerten des zweiten Zugriffselements (24); und
Initiieren des Zugriffs über das Zugriffsmedium (40) nach erfolgreicher Authentifizierung.

13. Computerlesbares Medium nach Anspruch 12, wobei das erste Zugriffselement (22) im Wesentlichen mit dem zweiten Zugriffselement (24) verknüpft ist und die Authentifizierung durch einen Vergleich des ersten Zugriffselements (22) und des zweiten Zugriffselements (24) bestimmt wird, und
wobei das erste Zugriffselement (22) mit dem zweiten Zugriffselement (24) über mindestens eine Replikation, Verwürfelung, paritätsbasierte Replikation, Bit-Check-Replikation, Kompression, digitale Signatur und Verschlüsselung verbunden ist.

14. Computerlesbares Medium nach Anspruch 10, wobei die Anweisungen Folgendes beinhalten:
beim Gewähren des Zugriffs über das Terminal (100) und das Zugriffsmedium (40), Schreiben einer aktualisierten Instanz des ersten Zugriffselements (22) in Bezug auf eine wesentliche Verknüpfung mit dem zweiten Zugriffselement (24) in einer sicheren Darstellung auf dem passiven E-Papier-Anzeigeabschnitt (42) des Zugriffsmediums (40).

15. Computerlesbares Medium nach Anspruch 10, wobei das Autorisieren eines Zugriffsmediums Folgendes umfasst:
Empfangen, über das Terminal (100), einer ersten Instanz des einmaligen Codes (85) auf das Zugriffsmedium (40),
und nach Abschluss der Authentifizierung, Schreiben, über den Bildgeber (120) des Terminals (100), einer zweiten Instanz des einmaligen Codes (85) auf den passiven E-Papier-Anzeigeabschnitt (42).

## Revendications

1. Support d'accès (40) destiné à être utilisé avec un terminal (100), le support d'accès (40) comprenant :
une partie d'affichage de papier électronique passif (42) ayant reçu un premier élément d'accès écrit de manière externe (22) ; et
une ressource de mémoire (46) stockant un second élément d'accès (24), permettant de déterminer l'authentification du support d'accès (40) par l'évaluation du premier élément d'accès (22) et l'évaluation du second élément d'accès (24) par un gestionnaire d'accès externe (371) à l'intérieur du terminal (100) ;
**caractérisé en ce que** :
le premier élément d'accès est écrit dans une représentation sécurisée sous une forme au moins partiellement lisible par machine sur la partie d'affichage de papier électronique passif (42) ; et
le support d'accès (40) comporte un code à usage unique (85) qui est épuisé après avoir été utilisé pour autoriser l'utilisation du support d'accès (40).

2. Support d'accès (40) selon la revendication 1, dans lequel le premier élément d'accès (22) est sensiblement lié au second élément d'accès (24), et l'authentification est déterminée par la comparaison du premier élément d'accès (22) par rapport au second élément d'accès (24).

3. Support d'accès (40) selon la revendication 2, dans lequel le premier élément d'accès (22) est lié au second élément d'accès (24) par l'intermédiaire d'au moins l'un parmi la réplication, le brouillage, la réplication paritaire, la réplication de contrôle de bits, la compression, la signature numérique et le cryptage.

4. Support d'accès (40) selon la revendication 1, dans lequel le code à usage unique est temporairement et physiquement dissimulé sur une surface du support d'accès (40).

5. Support d'accès (40) selon la revendication 1, dans lequel la ressource de mémoire (46) est une ressource de mémoire non électronique accessible sur au moins l'une d'une partie de papier non électronique (44) du support d'accès (40) et de la partie d'affichage de papier électronique passif (42).

6. Support d'accès (40) selon la revendication 1, comprenant :
au moins un indice de sécurité forensique sécurisé (255), visible en permanence sur, et optiquement lisible à partir d'au moins une surface du support d'accès (40), l'au moins un indice de sécurité médico-légal (255) étant sensiblement lié au premier élément d'accès (22), et la comparaison de l'au moins un indice de sécurité médico-légal sécurisé (255) et du premier élément d'accès (22) déterminant au moins partiellement l'authentification.

7. Système de flux de travail d'accès comprenant :
un terminal (100) comportant :
un premier module (110) pour autoriser l'utilisation d'une carte d'accès (40) à la réception d'un code à usage unique (85) qui est épuisé après utilisation ;
un imageur (120) pour écrire, sur autorisation par l'intermédiaire du premier module (110), une représentation sécurisée d'un premier élément d'accès (22) sous une forme au moins partiellement lisible par machine sur une partie d'affichage de papier électronique passif (42) de la carte d'accès (40) ;
un premier lecteur (122) pour lire optiquement la représentation sécurisée du premier élément d'accès (22) à partir de la partie d'affichage de papier électronique passif (42) ;
un second lecteur (126) pour lire un second élément d'accès (24) à partir d'une ressource de mémoire (46) de la carte d'accès (40) ; et
un gestionnaire d'accès (371) pour gérer les autorisations et les authentifications par l'intermédiaire du terminal (100), l'authentification étant déterminée par l'intermédiaire d'une évaluation de la représentation sécurisée à lecture optique du premier élément d'accès (22) et d'une évaluation du second élément d'accès (24).

8. Système selon la revendication 7, dans lequel le premier élément d'accès (22) est sensiblement lié au second élément d'accès (24), et l'authentification est déterminée par l'intermédiaire d'une comparaison du premier élément d'accès (22) et du second élément d'accès (24).

9. Système selon la revendication 7, dans lequel le premier élément d'accès sécurisé (22) est lié au second élément d'accès (24) par l'intermédiaire d'au moins l'un parmi la réplication, le brouillage, la réplication paritaire, la réplication de contrôle de bits, la compression, la signature numérique et le cryptage.

10. Système selon la revendication 7, dans lequel le second lecteur (126) fait partie du terminal (100).

11. Système selon la revendication 7, dans lequel le terminal (100) comporte un lecteur de sécurité forensique (270) permettant de lire un indice de sécurité forensique (255) sur une partie de papier autre que le papier électronique (44) de la carte d'accès (40), l'indice de sécurité forensique (255) étant sensiblement lié au premier élément d'accès sécurisé (22), et l'authentification étant au moins partiellement déterminée par l'intermédiaire d'une comparaison de l'indice de sécurité forensique (255) par rapport au moins au premier élément d'accès sécurisé (22).

12. Support lisible par ordinateur stockant des instructions exécutables sur un processeur du terminal (100) de la revendication 7 pour :
autoriser un support d'accès (40) sur le terminal (100) à la réception d'un code à usage unique (85) qui est épuisé après utilisation ;
sur autorisation, déterminer l'accès authentifié par l'intermédiaire :
de l'écriture, par l'intermédiaire du terminal (100), d'une représentation sécurisée d'un premier élément d'accès (22) sous une forme au moins partiellement lisible par machine sur une partie d'affichage de papier électronique passif (42) du support d'accès (40) ;
de la lecture optique par l'intermédiaire du terminal (100) de la représentation sécurisée du premier élément d'accès (22) à partir de la partie d'affichage de papier électronique passif (42) ;
de la lecture d'un second élément d'accès (24) à partir d'une ressource de mémoire (46) du support d'accès (40) ; et
de l'évaluation de la représentation sécurisée à lecture optique du premier élément d'accès (22) et de l'évaluation du second élément d'accès (24) ; et
initier l'accès par l'intermédiaire du support d'accès (40) une fois l'authentification réussie.

13. Support lisible par ordinateur selon la revendication 12, dans lequel le premier élément d'accès (22) est substantiellement lié au second élément d'accès (24), et l'authentification est déterminée par l'intermédiaire d'une comparaison du premier élément d'accès (22) et du second élément d'accès (24), et
le premier élément d'accès (22) étant lié au second élément d'accès (24) par l'intermédiaire d'au moins l'un parmi la réplication, le brouillage, la réplication paritaire, la réplication de contrôle de bits, la compression, la signature numérique et le cryptage.

14. Support lisible par ordinateur selon la revendication 10, dans lequel les instructions comportent :
lors de l'octroi d'un accès par l'intermédiaire du terminal (100) et du support d'accès (40), l'écriture d'une instance mise à jour du premier élément d'accès (22) par rapport à un lien substantiel avec le second élément d'accès (24) dans une représentation sécurisée sur la partie d'affichage de papier électronique passif (42) du support d'accès (40).

15. Support lisible par ordinateur selon la revendication 10, dans lequel l'autorisation d'un support d'accès comprend :
la réception, par l'intermédiaire du terminal (100), d'une première instance du code à usage unique (85) sur le support d'accès (40), et après avoir terminé l'authentification, l'écriture, par l'intermédiaire de l'imageur (120) du terminal (100), d'une seconde instance du code à usage unique (85) sur la partie d'affichage de papier électronique passif (42).
